# EUROPÄISCHE PATENTSCHRIFT

(11) **EP 0 473 050 B1**
(45) Veröffentlichungstag und Bekanntmachung des Hinweises auf die Patenterteilung: **29.05.1996**
(21) Anmeldenummer: 91113978.0
(22) Anmeldetag: 21.08.1991
(51) Int. Cl.: G11B 33/14, G11B 15/61

(54) **Magnetbandgerät mit einer beheizbaren Kopftrommel**
Magnetic tape device with a heatable head drum
Appareil à bande magnétique avec un tambour de tête qui peut être chauffé

(30) Priorität: 30.08.1990 DE 4027416; 30.08.1990 DE 4027417
(43) Veröffentlichungstag der Anmeldung: 04.03.1992
(73) Patentinhaber: DEUTSCHE THOMSON-BRANDT GMBH, D-78048 Villingen-Schwenningen (DE)
(72) Erfinder: Schandl, Hartmut, Dipl.-Ing., A-1110 Wien (AT); Gleim, Cünter, Dipl.-Ing., W-7730 Villingen (DE)

(56) Entgegenhaltungen:
- EP-A- 0 320 851
- DE-A- 2 330 986
- DE-B- 1 959 327

## Beschreibung

Die Erfindung betrifft ein Magnetbandgerät gemäß dem Oberbegriff des Anspruchs 1.

Kopftrommeln handelsüblicher Magnetbandgeräte wie z.B. Videorecorder weisen jeweils ein antreibbares Kopfrad (upper drum) sowie ein feststehendes Unterteil (lower drum) auf. Am Umfang des Kopfrades sind Magnetköpfe angeordnet, welche zur Wiedergabe und/oder Aufnahme von Signalen mit einem in einer Kassette gelagerten Magnetband in Eingriff gebracht werden, indem, bei vorgegebener Positionierung der Kassette auf einem Laufwerkchassis, das Magnetband mit Hilfe von Fädelelementen zunächst aus der Kassette ausgefädelt und dann bei zu rotieren beginnendem Kopfrad um die Kopftrommel geschlungen wird. Der Kopfradantrieb erfolgt durch einen elektronisch geregelten Motor. Hierbei ist es üblich, das Kopfrad von der Motorwelle direkt anzutreiben, wozu Motor und Kopftrommel jeweils fest zu einer mechanischen Einheit zusammengefügt sind. Als Motoren werden heute fast ausschließlich bürsten.lose Gleichstrommotoren mit einer elektronischen Kommutierungsschaltung für die Motor-Wicklungsstränge verwendet. Drehzahl und Phasenlage der Motorumdrehung werden bei konstanter Motorbetriebsspannung mittels einer in einer Regelschaltung gewonnenen Regelspannung eingestellt.

Bei raschen Umgebungstemperatur-Änderungen kann im Inneren des Magnetbandgerätes Taupunktunterschreitung und damit verbunden Kondensation von in der Luft vorhandenem Wasserdampf auftreten, wobei zwischen Luftfeuchtigkeit und Taupunkt bekanntlich folgender Zusammenhang besteht: Je größer die Luftfeuchtigkeit ist, desto höher liegt die Taupunkttemperatur. Speziell anfällig ist hierfür die auf dem Laufwerk des Magnetbandgerätes angeordnete Kopftrommel, da sie aus Aluminium gefertigt ist, das aufgrund seiner guten Wärmeleitfähigkeit eine Betauung (Feuchtigkeitsbeschlag) der Kopftrommeloberfläche begünstigt. Bei Inbetriebnahme des Magnetbandgerätes kann es infolge eines an der Kopftrommel vorhandenen Feuchtigkeitsbeschlages zu einem Kleben des Magnetbandes an der Kopftrommel kommen, was sowohl das Magnetband als auch die Magnetköpfe beschädigen kann. Außerdem beeinträchtigt ein Feuchtigkeitsbeschlag den Band/Kopf-Kontakt.

Es sind Videorecorder bekannt, bei denen zur Vermeidung dieser hauptsächlich in Gebieten mit hoher Luftfeuchtigkeit bestehenden Gefahr die Kopftrommel mittels eines im Bereich der Kopftrommel angeordneten Heizelementes beheizt wird. Dieses Heizelement besteht im allgemeinen aus einem als Kaltleiter (PTC-Widerstand) ausgebildeten temperaturabhängigen Widerstand mit einer bei etwa 50° C liegenden Bezugstemperatur, ab der ein annähernd sprunghafter, die Aufheizung begrenzender Widerstandswert-Anstieg einsetzt. Um die Kopftrommel taufrei zu halten bzw. einen eventuell vorhandenen Feuchtigkeitsbeschlag, der sich z.B. während einer Geräte-Netzabtrennung gebildet haben kann, aufzulösen, ist im sogenannten "standby mode", in den ein derartiger Videorecorder beim Anschließen an das Netz automatisch geschaltet wird und der dem ausgeschalteten Zustand entspricht, das Heizelement aktiv geschaltet. Die Energieversorgung des Heizelementes erfolgt über ein Verbindungskabel von einer im Netzteil des Gerätes befindlichen Spannungsquelle aus. Im Aufnahme- und Wiedergabebetrieb ist das Heizelement jedoch ausgeschaltet, da hierbei Magnetbandumschlingung der Kopftrommel und Rotation des Kopfrades eine Betauung der Kopftrommel verhindern. Hierzu dient ein elektronischer Schalter, der von einer mit dem Bedienteil des Gerätes kommunizierenden Schaltung entsprechend gesteuert wird.

Ein derartiges Heizelement ist üblicherweise mittels einer metallenen Schelle am Umfang des feststehenden Kopftrommelunterteils befestigt. Die Übertragung der von dem Heizelement erzeugten Wärme erfolgt hierbei im wesentlichen durch Wärmeleitung an das Kopftrommelunterteil und von dort aus durch Konvektion an das drehbare Kopfrad. Neben der metallenen Schelle sind mehrere manuelle Tätigkeiten für die Anordnung des Heizelementes notwendig.

Es ist Aufgabe der Erfindung, den Aufwand für die Beheizung der Kopftrommel zu verringern.

Aus der DE 1 959 327 ist es bekannt, über die Erwärmung eines am Antriebsmotor der Kopftrommel angebrachten Heizkörpers die Kopftrommel auf eine höhere Temperatur zu bringen, um die Abnutzungsrate der Polspitzen der rotierenden Videoköpfe zu verringern.

Zur Vermeidung von Betauungen der Kopftrommel ist es aus der DE 2 330 986 bekannt, dem eigentlichen Aufnahme-/Wiedergabebetrieb eine Vorwärmphase vorzuschalten. Die Heizphase wird jedoch hier in Abhängigkeit von der erreichten Temperatur beendet und nicht in Abhängigkeit vom Betriebszustand des Antriebsmotors der Kopftrommel.

Eine Beendigung der Heizphase durch eine sensorgesteuerte Abschaltung des Heizelementes wird auch in der EP 0 320 851 vorgeschlagen, wobei als Sensoren auf Temperatur und/oder Feuchtigkeit reagierende Sensoren in Betracht gezogen werden.

Die Aufgabe wird erfindunsgemäß durch die im Anspruch 1 angegebenen Merkmale gelöst. Vorteilhafte Weiterbildungen sind in den Unteransprüchen angegeben.

Im Prinzip wird das Heizelement zur Beheizung des Kopftrommel, die mit einem elektronisch kommutier- und regelbaren Gleichstrommotor eine zuvor erwähnte mechanische Einheit bildet, im Bereich des Motors, vorzugsweise im Stator des Motors, angeordnet.

Der Stator eines derartigen Gleichstrommotors enthält eine vorgegebene Anzahl elektronisch kommutierbarer Wicklungsstränge. Die Wicklungsstränge setzen sich aus einzelnen Spulen zusammen, welche gleichmäßig am Umfang eines aus geschichteten Eisenblechen bestehenden ringförmigen Statorpaketes angeordnet sind. Das Statorpaket umschließt formschlüssig ein sogenanntes Achsengehäuse, welches im Kopftrommelunterteil ausgebildet ist und in den Motorraum hineinreicht. In dem Achsengehäuse ist die Motorwelle drehbar gelagert, wobei der aus dem Achsengehäuse nach oben herausstehende Teil der Motorwelle mit dem Magnetköpfe tragenden Kopfrad der Kopftrommel fest verbunden ist, während der aus dem Achsengehäuse nach unten herausstehende Teil der Motorwelle mit dem Rotor des Motors fest verbunden ist. Die Wicklungsstränge sind an einem innerhalb des Motors befindlichen Teilbereich einer ortsfesten Leiterplatte elektrisch angeschlossen. Der außerhalb des Motors befindliche Teilbereich der Leiterplatte enthält einen oder mehrere Sensoren (pick-up) zur Gewinnung einer Regelgröße für die Motorregelung einerseits und von Kommutierungs-Steuersignalen für die Kommutierungsfolge der Wicklungsstränge andererseits sowie Anschlüsse für eine Motorregelschaltung und für die Zuführung von Betriebsspannungen. Im Rotor sind einzelne Feldmagnete in ebenfalls vorgegebener Anzahl ringförmig angeordnet. Diese stehen mit einem Luftspalt als Abstand den vorgenannten Spulen gegenüber. Zur Erzeugung eines magnetischen Drehfeldes bzw. eines Drehmomentes werden die feststehenden Wicklungsstränge zyklisch mit Strom versorgt. Dies geschieht mit Hilfe der Kommutierungs-Steuersignale und einer auf der Leiterplatte angeordneten elektronischen Kommutierungsschaltung, die Teil der Motorregelschaltung ist und als sogenannter integrierter Motorschaltkreis ausgebildet sein kann. Die Kommutierungsschaltung schaltet immer jene Wicklungsstränge ein, die gegenüber den mit dem Rotor umlaufenden Feldmagneten eine für die Drehmomentenbildung günstige Stellung haben. Bei konstanter Motorbetriebsspannung wird die Größe der dabei durch die jeweiligen Wicklungsstränge fließenden Ströme von einer in der Motorregelschaltung erzeugten Regelspannung bestimmt, indem diese den Wicklungssträngen zugeordnete, im Schaltbetrieb arbeitende Endstufen der Kommutierungsschaltung entsprechend aussteuert.

Das Heizelement wird vorzugsweise in das vorgenannte, aus Eisenblechen bestehende Statorpaket des Motors eingepaßt und zwecks Energieversorgung an der Leiterplatte elektrisch angeschlossen. In dieser Anordnung benötigt das Heizelement keine zusätzlichen Befestigungsmittel. Eine mit Hilfe des Heizelementes erzeugte Wärme wird hierbei im wesentlichen über das Statorpaket und das in den Motorraum hineinreichende Achsengehäuse an die Kopftrommel weitergeleitet.

Bei dieser Heizelementanordnung wird der Kopftrommel effektiver Wärmeenergie zugeführt, da eine direkte Wärmeabgabe von dem Heizelement an die Umgebung wie bei der erwähnten bekannten Heizelementanordnung am Kopftrommelunterteil praktisch vermieden wird. Hierdurch wird elektrische Energie eingespart.

Eine weitere Reduzierung des Aufwandes für die Beheizung der Kopftrommel wird dadurch erreicht, daß zum einen für die Energieversorgung des Heizelementes die Motorbetriebsspannung ausgenutzt wird. Deren Quelle wird in den durch Motorstillstand gekennzeichneten Gerätebetriebsarten wie z.B. "standby mode" und "stop mode" durch den Motor nicht belastet und vermag, den relativ großen Einschaltstrom des vorzugsweise als PTC-Widerstand ausgebildeten Heizelementes aufzubringen. Im Aufnahme- und Wiedergabebetrieb (Sonderfunktionen sind hierin eingeschlossen) wird aus bereits erwähntem Grund das Heizelement abgeschaltet, so daß in diesen Gerätebetriebsarten die Motorbetriebsspannungsquelle durch das Heizelement nicht belastet wird. Zum anderen wird die Motorregelschaltung zur Steuerung eines elektronischen Schalters ausgenutzt, mit dem das Heizelement ein- bzw. abgeschaltet wird. Zur Abschaltung des Heizelementes bzw. zur entsprechenden Steuerung des elektronischen Schalters eignen sich insbesondere die Regelspannung oder, falls zur Gewinnung von Kommutierungs-Steuersignalen und Regelgröße der Motor mit einer aus Lichtemissions- und Photoelement bestehenden Lichtschranke mechanisch verkoppelt ist, eine Schaltspannung, die das Lichtemissionselement einschaltet und damit die Lichtschranke aktiviert. Die Schaltspannung ist z.B. in einer derartigen Motorregelschaltung gewinnbar. In den durch Motorstillstand gekennzeichneten Betriebsarten ist das Lichtemissionselement, das z.B. eine Leuchtdiode (LED) sein kann, abgeschaltet, denn die Lebensdauer einer derartigen Lichtschranke hängt bekanntlich im wesentlichen vom Betrieb ihres Lichtemissionselementes ab.

Durch die Versorgung des Heizelementes mit der Motorbetriebsspannung und durch die Steuerung des Heizelementes durch den von der Motorregelschaltung gesteuerten elektronischen Schalter läßt sich das Schaltungskonzept im Bedien- und Netzteil des Gerätes vereinfachen.

Durch die Anordnung des Heizelementes sowie dessen elektronischen Schalters auf der Leiterplatte werden kostenaufwendige Verbindungsleitungen eingespart. Darüber hinaus besteht der Vorteil, daß sowohl das Heizelement als auch der elektronische Schalter auf der Leiterplatte automatisch bestückt werden können.

Zur näheren Erläuterung der Erfindung werden im folgenden mehrere Ausführungsbeispiele anhand der Zeichnungen beschrieben. Diese zeigen in
- Fig. 1: im vergrößerten Maßstab eine bekannte Kopftrom mel für einen VHS-Videorecorder in Vorderansicht,
- Fig. 2a: im gleichen vergrößerten Maßstab eine Kopftrommel gemäß Fig. 1 in Vorderansicht in Kombination mit einem in einem Teilschnitt dargestellten bürstenlosen Gleichstrommotor und einer erfindungsgemäßen Anordnung eines Heizelementes,
- Fig. 2b: im gleichen vergrößerten Maßstab einen Teil des Motors gemäß Fig. 2a in unterer Ansicht,
- Fig. 3a: ein Prinzip-Schaltbild einer Schaltung zur Rege lung des Motors gemäß Fig. 2a in Verbindung mit einem elektronischen Schalter für das Heizelement und
- Fig. 3b: ein Prinzip-Schaltbild gemäß Fig.3a mit einem anderen elektronischen Schalter für das Heizelement.

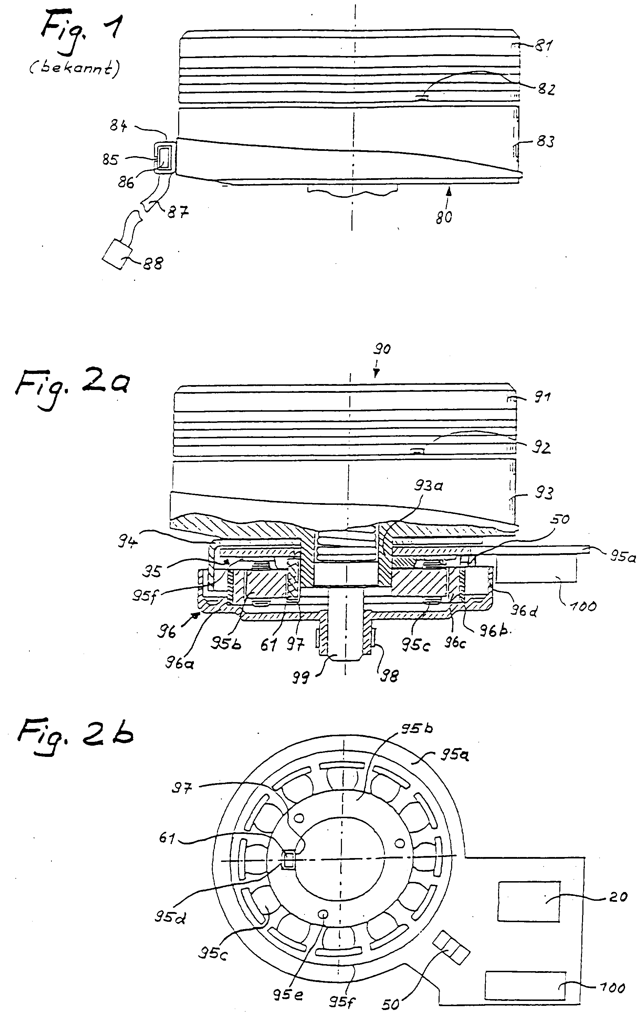

Fig. 1 zeigt eine bekannte Kopftrommel 80 mit einem Heizelement 86. Die Kopftrommel 80 besteht aus einem drehbaren, Magnetköpfe 82 tragenden Kopfrad 81 und einem feststehenden Kopftrommelunterteil 83. Das Heizelement 86 ist am feststehenden Kopftrommelunterteil 83 angeordnet. Das Heizelement 86 ist als PTC-Widerstand ausgebildet, welcher, von einem elektrisch isolierenden Schlauch 85 umhüllt, mittels einer ihn umspannenden metallenen Schelle 84 am Kopftrommelunterteil 83 befestigt ist. Ein an dem Heizelement 86 angeschlossenes, einen Steckverbinder 88 aufweisendes Verbindungskabel 87 dient dabei zur elektrischen Stromversorgung vom Gerätenetzteil aus.

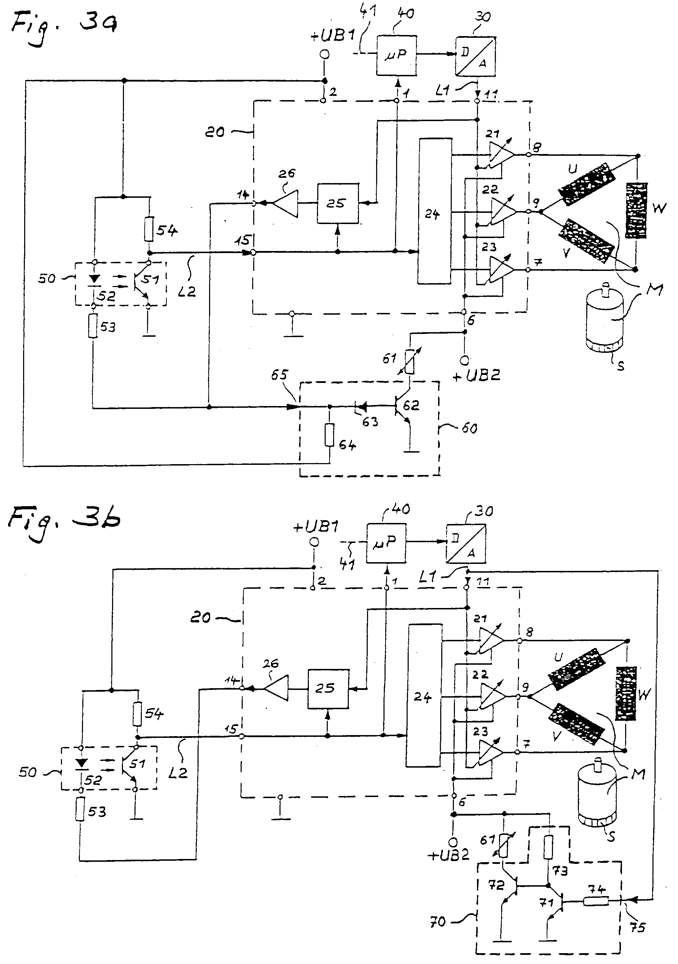

Fig. 2a zeigt eine weitere Kopftrommel 90 in Kombination mit einem bürstenlosen Gleichstrommotor, in dessen Stator 95 ein als PTC-Widerstand ausgebildetes Heizelement 61 angeordnet ist. Die Kopftrommel 90 besteht aus einem drehbaren, Magnetköpfe 92 tragenden Kopfrad 91 und einem feststehenden Kopftrommelunterteil 93. Das als PTC-Widerstand ausgebildete Heizelement 61 ist von einer elektrischen Isolierschicht ummantelt. Fig. 2b zeigt eine Leiterplatte 95a, auf der erstens, über ein kunststoffartiges Abstandselement 95, ein aus Eisenblechen bestehendes Statorpaket 95b mit elektronisch kommutierbaren Spulen 95c und einer dem Heizelement 61 angepaßten Ausnehmung 95d, zweitens das Heizelement 61, drittens ein Teil einer in Fig. 3a und Fig. 3b dargestellten Motorregelschaltung, viertens ein elektronischer Schalter gemäß Fig. 3a oder Fig. 3b zur Steuerung von Heizelement 61 und fünftens ein Steckverbinder 100 angeordnet sind.

Der Stator 95 und Motorgehäuse 94 sind mit dem Kopftrommelunterteil 93 fest verbunden, wozu Schrauben (nicht dargestellt) durch im Statorpaket 95b angedeutete Öffnungen 95e gesteckt und im Kopftrommelunterteil 93 eingeschraubt sind. Dabei wird das Heizelement 61 zum einen von dem Statorpaket formschlüssig umfaßt, und zum anderen liegt es an einem Achsengehäuse 93a an, das im Kopftrommelunterteil 93 ausgebildet ist und in den Motorraum hineinreicht. In dem Achsengehäuse 93a ist eine Motorwelle 99 drehbar gelagert, wobei der aus dem Achsengehäuse 93a nach oben herausstehende Teil von Motorwelle 99 mit dem Magnetköpfe 92 tragenden Kopfrad 91 fest verbunden ist, während der aus dem Achsengehäuse 93a nach unten herausstehende Teil von Motorwelle 99 mit dem Rotor 96 fest verbunden ist. Der Rotor 96 besteht aus einem kreisförmigen Profilteil 96a, auf dem gleichmäßig auf einem Radius verteilte, von einem Weicheisenring 96b umspannte Feldmagnete 96c angeordnet sind. Die Feldmagnete 96c stehen den Spulen 95c mit einem Luftspalt als Abstand gegenüber.

Der Rotor 96 ist mittels eines das Profilteil 96a umspannenden Federringes 98 an der Motorwelle 99 befestigt. Das Profilteil 96a besteht aus lichtdurchlässigem Kunststoff. Auf dem ringförmig ausgebildeten Umfang 96d von Profilteil 96a, der in den Spalt einer Gabellichtschranke 50 eintaucht, sind lichtundurchlässige Strichmarkierungen angebracht. Bei rotierendem Motor werden durch die Strichmarkierungen in der Gabellichtschranke 50 Impulse (Signale) erzeugt, aus deren Folge Kommutierungs-Steuersignale und Regelgröße zur Regelung des Motors nach Drehzahl und Phasenlage ableitbar sind. Die Gabellichtschranke 50 ist in einer festen Zuordnung zu den Spulen 95c Leiterplatte 95a angeordnet.

Die Spulen 95c, von denen jeweils vier zu einem von in Fig. 3a und Fig. 3b dargestellten Wicklungssträngen U, V, W zusammengeschaltet sind, die Gabellichtschranke 50 und ein integrierter Motorschaltkreis (z.B. U2560B/Telefunken) 20 bilden dabei den vorgenannten, auf der Leiterplatte 95a befindlichen Teil der Motorregelschaltung. Die elektrischen Verbindungen für die Zusammenschaltung mit dem im Gerät angeordneten Teil der Motorregelschaltung einerseits und für die Zuführung von Betriebsspannungen aus dem Gerätenetzteil andererseits sind mittels eines an dem Steckverbinder 100 anschließbaren Verbindungskabels herstellbar.

Fig. 3a zeigt die Motorregelschaltung in Verbindung mit dem Heizelement 61 und einem elektronischen Schalter 60, dessen Steuereingang 65 eine von der Motorregelschaltung erzeugbare Schaltspannung zuführbar ist, durch die die Gabellichtschranke 50 aktivierbar und das Heizelement 61 dagegen abschaltbar ist.

Die Motorregelschaltung besteht im wesentlichen aus den Wicklungssträngen U, V, W von Motor M, dem integrierten Motorschaltkreis (U2560B/Telefunken) 20, der Gabellichtschranke 50 und einem Mikroprozessor (z.B. ZC93147P/Motorola) 40, im folgenden µP genannt, mit einer ihm nachgeschalteten D/A-Wandlerschaltung 30. Der µP 40 ist über eine Datenbusleitung 41 mit einem Gerätebedienteil verbindbar. Über den µP 40 ist die Motorregelschaltung aktivierbar. Während des Regelbetriebes arbeitet der uP 40 als Regler. Den Wicklungssträngen U, V, W, die zu einer Dreieckschaltung zusammengeschaltet sind, sind im Motorschaltkreis 20 befindliche Endstufen 21-23 zugeordnet. Die Endstufen 21-23 sind als steuerbare Verstärker ausgebildet. Diese besitzen je zwei Eingänge, wobei jeweils ein erster Eingang mit einem zugeordneten Ausgang eines im Motorschaltkreises 20 befindlichen ersten Schaltwerkes 24 verbunden ist. Die zweiten Eingänge sind parallelgeschaltet und mit einem Motorschaltkreis-Anschluß 11 verbunden, der über eine Signalleitung L1 mit dem Ausgang von D/A-Wandlerschaltung 30 verbunden ist. Die Ausgänge der Endstufen 21-23 sind über Motorschaltkreis-Anschlüsse 7-9 mit den Wicklungssträngen U, V, W verbunden. Das erste Schaltwerk 24 dient der Steuerung der Endstufen 21-23 für die Kommutierungsfolge der Wicklungsstränge U, V, W.

Die Gabellichtschranke 50 besteht aus einem Phototransistor 51 und einer LED 52. Die Anode von LED 52 liegt an einer konstanten positiven Betriebsspannung +UB1, die einem Motorschaltkreis-Anschluß 2 zur Versorgung des ersten Schaltwerkes 24, eines zweiten Schaltwerkes 25 sowie eines dem zweiten Schaltwerk 25 nachgeschalteten Schaltverstärkers 26 zugeführt wird. Der Ausgang (Motorschaltkreis-Anschluß 14) von Schaltverstärker 26 ist mit dem Steuereingang 65 des elektronischen Schalters 60 und über einen Vorwiderstand 53 mit der Kathode von LED 52 verbunden. Der Emitter von Phototransistors 51 liegt an Masse (Bezugspotential). Der Kollektor von Phototransistor 51 bildet den Signalausgang von Gabellichtschranke 50. Er ist zum einen über eine Signalleitung L2 mit einem Motorschaltkreis-Anschluß 15 und zum anderen über einen Arbeitswiderstand 54 mit der positiven Betriebsspannung +UB1 verbunden.

Der elektronische Schalter 60 umfaßt einen NPN-Transistor 62, eine Zenerdiode 63 und einen Widerstand 64. Die Anode von Zenerdiode 63 ist mit der Basis von Transistor 62 verbunden. Ihre Kathode bildet den Steuereingang 65 des elektronischen Schalters 60. Der Widerstand 64 ist zwischen Steuereingang 65 und der positiven Betriebsspannung +UB1 geschaltet. Die Kollektor-Emitter-Strecke von Transistor 62, dessen Emitter an Masse liegt, und das Heizelement 61 bilden eine Reihenschaltung, die zwischen Masse und einer konstanten positiven Motorbetriebsspannung +UB2 geschaltet ist. Die positive Motorbetriebsspannung +UB2 wird über einen Motorschaltkreis-Anschluß 6 den Endstufen 21-23 zugeführt.

Die Zenerdiode 63 ist so ausgelegt, daß die Spannungsdifferenz zwischen der positiven Betriebsspannung +UB1 und der Summe aus Durchbruchspannung (Uz) von Zenerdiode 63 und Durchlaßspannung (UBE) der Basis-Emitter-Strecke von Transistor 62 kleiner ist als die Durchlaßspannung von LED 52. Hierdurch wird erreicht, daß im gesperrten Arbeitszustand von Schaltverstärker 26 die LED 52 gesperrt bleibt und der Tansistor 62 dagegen durchgeschaltet ist, wobei der in den Steuereingang (Basis) von Transistor 62 fließende Strom an Widerstand 64 einen der vorgenannten Spannungsdifferenz entsprechenden Spannungsabfall zur Folge hat, und im leitendem Arbeitszustand von Schaltverstärker 26, der durch Ansteuerung von Schaltverstärker 26 bewirkt wird, andererseits die LED 52 durchgeschaltet ist und der Transistor 62 dagegen gesperrt bleibt.

Die Motorregelschaltung arbeitet mit dem elektronischen Schalter 60 wie folgt zusammen: Zur Abschaltung bzw. zur Einschaltung von LED 52 werden von dem zweiten Schaltwerk 25 beide Signalleitungen L1, L2 abgefragt. Führt dabei keine der beiden Signalleitungen L1, L2 Signale, sperrt das Schaltwerk 25 den Schaltverstärker 26 bzw. dessen Ausgangswiderstand wird so hochohmig, daß über den Motorschaltkreis-Anschluß 14 kein Versorgungstrom (Durchlaßstrom) für die LED 52 geliefert werden kann. Hierdurch erfolgt an Motorschaltkreis-Anschluß 14 ein Spannungsanstieg auf ein Potential, das seinerseits einen in die Basis von Transistor 62 fließenden Steuerstrom zur Folge hat, so daß der Transistor 62 also durchgeschaltet und damit das Heizelement 61 angeschaltet wird. Die Größe des Steuerstromes wird dabei im wesentlichen durch den Widerstand 64 bestimmt.

Führt dagegen eine oder jede der beiden Signalleitungen L1, L2 Signale, steuert das Schaltwerk 25 den Schaltverstärker 26 an. Der damit verbundene leitende Arbeitszustand von Schaltverstärker 26 hat die Durchschaltung von LED 52 zur Folge. Das dabei zwischen den Motorschaltkreis-Anschlüssen 2 und 14 erzeugte Potentialgefälle (Schaltspannung) bewirkt die Sperrung von Transistor 62 und somit die Abschaltung von Heizelement 61.

Signale auf den Signalleitungen L1, L2 werden wei folgt erzeugt: Beim Start des Aufnahme- oder Wiedergabebetriebes gibt der µP 40 zunächst ein Startsignal (Impuls) aus. Das Startsignal wird in der D/A-Wandlerschaltung 30 in ein analoges Startsignal umgewandelt, welches über die Signalleitung L1 den parallelgeschalteten Eingängen der Endstufen 21-23 sowie einem ersten Eingang des zweiten Schaltwerkes 25 zugeführt wird. Das analoge Startsignal bewirkt dabei sowohl das Anlaufen von Motor M als auch das Einschalten von LED 52. Bei rotierendem Motor M werden mit Hilfe der am erwähnten Rotorumfang angebrachten Strichmarkierungen S in der mit dem Motor M gekoppelten Gabellichtschranke 50 Signale (Impulse) erzeugt, welche über die Signalleitung L2 einem zweiten Eingang des zweiten Schaltwerkes 25, einem Eingang des ersten Schaltwerkes 24 und von dem Motorschaltkreis-Anschluß 1 aus einem Dateneingang von µP 40 zugeführt werden. Diese Signale werden von dem µP 40 sowie von den beiden Schaltwerken 24, 25 ausgewertet. Aus der Folge dieser Signale gewinnt der µP 40 die Regelgröße für die Motoregelung und das Schaltwerk 24 Steuersignale, die die Endstufen 21-23 für die Kommutierungsfolge der Wicklungsstränge U, V, W zyklisch schalten. Der µP 40 vergleicht die Regelgröße mit einer vorgegeben Führungsgröße und gibt als Ergebnis des Vergleichs ein pulsweitenmoduliertes Signal (PWM) aus. Das PWM-Signal enthält die Information für die Größe des zu erzeugenden Drehmomentes (Stellgröße) zum Antrieb des Rotors von Motor M. Mit Hilfe der D/A-Wandlerschaltung 30 wird das PWM-Signal in ein analoges Signal (Regelspannung) umgewandelt und anschließend über die Signalleitung L1 den parallelgeschalteten Eingängen der Endstufen 21-23 sowie einem ersten Eingang des zweiten Schaltwerkes 25 zugeführt.

Bei Beendigung des Spielbetriebes stoppt der µP 40 die Ausgabe von Signalen an die D/A-Wandlerschaltung 30, sodaß der Ausgang von D/A-Wandlerschaltung 30 auf sein Ruhepotential zurückfällt. Das hat die Sperrung der Endstufen 21-23 zur Folge, so daß kein Drehmoment zum Antrieb des Rotors von Motor M mehr erzeugt wird und damit der Motor M zum Stillstand kommt.

Fig. 3b zeigt die in Fig. 3a beschriebene Motorregelschaltung in Verbindung mit dem Heizelement 61 und einem elektronischen Schalter 70, dessen Steuereingang 75 die Regelspannung zuführbar ist.

Der elektronische Schalter 70 umfaßt einen ersten NPN-Transistor 71, einen zweiten NPN-Transistor 72 und Widerstände 73 und 74. Die Emitter der beiden Transistoren 71, 72 liegen an Masse. Die Kollektor-Emitter-Strecke des zweiten Transistors 72 und das Heizelement 61 bilden eine Reihenschaltung, die zwischen Masse und der positiven Motorbetriebsspannung +UB2 geschaltet ist. Der Kollektor des ersten Transistors 71 ist mit dem Steuereingang (Basis) des zweiten Transistors 72 verbunden. Der zwischen dem Kollektor des ersten Transistors 71 und der positiven Motorbetriebsspannung +UB2 geschaltete Widerstand 73 ist der Arbeitswiderstand des ersten Tansistors 71. Der Steuereingang (Basis) des ersten Transistors 71 ist über den Widerstand 74 mit der Signalleitung L1 verbunden.

Die Regelspannung wie auch das analoge Startsignal sind stets größer als die Durchlaßspannung (UBE) der Basis-Emitter-Strecke des ersten Transistors 71. Die Regelspannung und das analoge Startsignal schalten daher den ersten Transistor 71 durch. Hierdurch ist der zweite Transistor 72 gesperrt, und somit das Heizelement 61 abgeschaltet.

Das Ruhepotential des Ausgangs von D/A-Wandlerschaltung 30 ist dagegen kleiner als die Durchlaßspannung (UBE) der Basis-Emitter-Strecke des ersten Transistors 71. Das Ruhepotential sperrt also den Transistor 71. Durch die Sperrung des ersten Transistors 71 ist der zweite Transistors 72 durchgeschaltet und somit das Heizelementes 61 eingeschaltet.

Jeder der beiden steuerbaren elektronischen Schalter 60 und 70 läßt sich auch in einen integrierten Schaltkreis, z.B. von der Art des Motorschaltkreises U2560B/Telefunken, integrieren.

Die Erfindung ist auch zur Beheizung der Kopftrommel von Camcordern und DAT-Recordern geeignet.

## Patentansprüche

1. Magnetbandgerät mit einer drehbaren, von einem Magnetband umschlingbaren Kopftrommel (80; 90), die durch einen mit ihr eine mechanische Einheit bildenden regelbaren Motor (M) antreibbar ist, und mit einem zur Beheizung der Kopftrommel (90) einschaltbaren Heizelement (61), **dadurch gekennzeichnet,** daß das Heizelement (61) im Motor (M) angeordnet und mit einem einen Steuereingang (65; 75) aufweisenden elektronischen Schalter (60; 70) verbunden ist, welcher zum Einschalten des Heizelementes (61) in den durch Motorstillstand gekennzeichneten Gerätebetriebsarten und zum Abschalten des Heizelementes (61) in den durch Motorbetrieb gekennzeichneten Gerätebetriebsarten von der elektronischen Regelschaltung des Motors (M) gesteuert wird.

2. Gerät nach Anspruch 1, **dadurch gekennzeichnet,** daß das Heizelement (61) im Stator (95) des Motors (M) angeordnet ist, der als elektronisch kommutierbarer Motor ausgebildet ist und mittels einer elektronischen Regelschaltung regelbar ist.

3. Gerät nach Anspruch 1 oder 2, **dadurch gekennzeichnet,** daß zur elektrischen Energieversorgung des Heizelementes (61) eine dem Motor (M) als Betriebsspannung dienende Spannung (UB2) verwendet wird.

4. Gerät nach einem der Ansprüche 1 - 3, **dadurch gekennzeichnet,** daß der Steuereingang (65) des elektronischen Schalters (60) mit einer Signalleitung (L1) der elektronischen Regelschaltung des Motors (M) verbunden ist, die während des Motorbetriebes eine der Regelung des Motors (M) dienende Regelspannung führt.

5. Gerät nach Anspruch 4, **dadurch gekennzeichnet,** daß das Heizelement (61) mit der Regelspannung abgeschaltet wird.

6. Gerät nach Anspruch 1, **dadurch gekennzeichnet,** daß der Steuereingang (75) des Schalters (70) mit dem Ausgang eines von der Motorregelschaltung gesteuerten Schaltverstärkers (26) verbunden ist, an dessen Ausgang während des Motorbetriebes eine Schaltspannung anliegt, mit der eine mit dem Motor (M) mechanisch verkoppelte Lichtschranke (50) eingeschaltet ist, mit der die Regelgröße für die Regelung des Motors (M) sowie Kommutierungssteuersignale für die Kommutierungsfolge seiner Wicklungsstränge (U, V, W) gewonnen werden.

7. Gerät nach Anspruch 6, **dadurch gekennzeichnet,** daß das Heizelement (61) mit der die Lichtschranke (59) einschaltenden Schaltspannung abgeschaltet wird.

8. Gerät nach einem der Ansprüche 1 - 7, **dadurch gekennzeichnet,** daß das Heizelement (61) ein PTC-Widerstand ist.

## Claims

1. A magnetic tape device with a rotatable head drum (80; 90) which can have a magnetic tape wound around it and which can be driven by a controllable motor (M) forming a mechanical unit with it, and with a heating element (61) which can be switched on for heating the head drum (90), characterised in that the heating element (61) is arranged in the motor (M) and is connected to an electronic switch (60; 70) having a control input (65; 75) and which is controlled by the electronic control circuit of the motor (M) for switching on the heating element (61) in the operating modes of the device characterised by the motor being stationary and for switching off the heating element (61) in the operating modes of the device characterised by motor operation.

2. A device according to claim 1, characterised in that the heating element (61) is arranged in the stator (95) of the motor (M) which is constructed as an electronically-commutatable motor and can be controlled by means of an electronic control circuit.

3. A device according to claim 1 or 2, characterised in that a voltage (UB2) which serves as an operating voltage for the motor (M) is used for supplying the electrical energy for the heating element (61).

4. A device according to claims 1 - 3, characterised in that the control input (65) of the electronic switch (60) is connected to a signal line (L1) of the electronic control circuit of the motor (M) which, during operation of the motor, carries a control voltage serving for controlling the motor (M).

5. A device according to claim 4, characterised in that the heating element (61) is switched off using the control voltage.

6. A device according to claim 1, characterised in that the control input (75) of the switch (70) is connected to the output of a switching amplifier (26) controlled by the motor control circuit and this switching amplifier has a switching voltage at its output when the motor is in operation which switches on a photo-electric barrier (50) which is mechanically coupled with the motor (M) and from which is obtained the control variable for the control of the motor (M) and commutation control signals for the commutation sequence of its winding strands (U, V, W).

7. A device according to claim 6, characterised in that the heating element (61) is switched off using the switching voltage which switches on the photo-electric barrier (59).

8. A device according to any one of claims 1 - 7, characterised in that the heating element (61) is a PTC resistor.

## Revendications

1. Appareil à bande magnétique avec tambour à têtes magnétiques (80 ; 90) rotatif pouvant être entouré par une bande magnétique et entraîné par un moteur (M) réglable qui forme une unité mécanique solidaire avec le tambour ainsi qu'avec un élément de chauffage (61) pouvant être mis en marche pour le réchauffement du tambour à têtes magnétiques (90), caractérisé en ce que l'élément de chauffage (61) est logé dans le moteur (M) et relié à un interrupteur électronique (60; 70) présentant une entrée de commande (65; 75), cet interrupteur étant commandé par le circuit de régulation électronique du moteur (M) pour la mise en marche de l'élément de chauffage (61) dans les modes de service de l'appareil caractérisés par l'arrêt du moteur et pour la coupure de l'élément de chauffage (61) dans les modes de service de l'appareil caractérisés par le fonctionnement du moteur.

2. Appareil selon la revendication 1, caractérisé en ce que l'élément de chauffage (61) est logé dans le stator (95) du moteur (M) conçu sous forme de moteur à commutation électronique et réglable à l'aide d'un circuit de régulation électronique.

3. Appareil selon la revendication 1 ou 2, caractérisé en ce qu'une tension (UB2) servant de tension de service au moteur (M) est utilisée pour l'alimentation électrique de l'élément de chauffage (61).

4. Appareil selon l'une des revendications 1 à 3, caractérisé en ce que l'entrée de commande (65) de l'interrupteur électronique (60) est reliée à une ligne de signaux (L1) du circuit de régulation électronique du moteur (M), parcouru pendant le fonctionnement du moteur par une tension de régulation servant au réglage du moteur (M).

5. Appareil selon la revendication 4, caractérisé en ce que l'élément de chauffage (61) est arrêté avec la tension de régulation.

6. Appareil selon la revendication 1, caractérisé en ce que l'entrée de commande (75) de l'interrupteur (70) est reliée à la sortie d'un amplificateur de commutation (26) commandé par le circuit de réglage du moteur, une tension de commutation étant appliquée à la sortie de cet amplificateur pendant le fonctionnement du moteur et permettant la mise en service d'une barrière photo-électrique (50) couplée mécaniquement avec le moteur (M) à l'aide de laquelle sont obtenues la grandeur réglée pour le réglage du moteur (M) ainsi que des signaux de commande de la commutation pour la séquence de commutation des phases d'enroulement (U, V, W) du moteur.

7. Appareil selon la revendication 6, caractérisé en ce que l'élément de chauffage (61) est couplé avec la tension de commutation qui met en service la barrière photo-électrique (59).

8. Appareil selon l'une des revendications 1 à 7, caractérisé en ce que l'élément de chauffage (61) est un thermistor PTC.
